# EUROPEAN PATENT APPLICATION

(11) **EP 2 835 679 A1**
(43) Date of publication of application: **11.02.2015**
(21) Application number: 13275181.9
(22) Date of filing: 06.08.2013
(51) Int. Cl.: G02B 27/01

(54) **Display system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

According to a first aspect of the invention, there is provided a display system, comprising: an angular intensity distribution element, arranged to receive electromagnetic radiation from one or more sources of electromagnetic radiation and to affect an angular intensity distribution of the electromagnetic radiation, the angular intensity distribution element introducing an undesirable feature into a distribution of the electromagnetic radiation; one or more optical elements located downstream of the angular intensity distribution element, and arranged to affect an angular and/or spatial intensity distribution of the electromagnetic radiation prior to display of the radiation to a user of the system; and a spatial filter, located downstream of the angular intensity distribution element, and arranged to receive the electromagnetic radiation and to at least partially correct for the undesirable feature (e.g. at least partially reduce and/or eliminate the feature or a related effect).

## Description

The present invention relates generally to a display system. The invention might be particularly suited to use as, or as part of, a head-up display system.

In a display system, it is known to use an angular intensity distribution element to affect an angular intensity distribution of electromagnetic radiation received by that element. For instance, such an element may be used to introduce a particular angular and/or spatial intensity distribution in the radiation that is transmitted by or reflected from the element. However, although such an angular intensity distribution element may be used to introduce one or more desired features into an intensity distribution of the electromagnetic radiation, one or more undesirable features may also be introduced. Such one or more undesired features may be introduced, for example, as a by-product of the desired changes in angular intensity distribution introduced by the element.

The undesirable feature may, of course, be interpreted subjectively. However, in at least one example an undesirable feature may be electromagnetic radiation having certain angular and/or spatial properties that are not desired or needed downstream of the angular intensity distribution element. Such undesired features could result in a reduction in optical quality or performance of the system as a whole, which could translate in to a reduction in perceived quality of an image displayed to a user.

It is an aim of an example embodiment of the present invention to at least partially obviate or mitigate one or more problems of the prior art, whether identified herein or elsewhere, or to at least provide an alternative to existing display systems.

According to the present invention there is provided an apparatus and/or method as set forth in the appended claims. Other features of the invention will be apparent from the dependent claims, and the description and Figures that follow.

According to a first aspect of the invention, there is provided a display system, comprising: an angular intensity distribution element, arranged to receive electromagnetic radiation from one or more sources of electromagnetic radiation and to affect an angular intensity distribution of the electromagnetic radiation, the angular intensity distribution element introducing an undesirable feature into a distribution of the electromagnetic radiation; one or more optical elements located downstream of the angular intensity distribution element, and arranged to affect an angular and/or spatial intensity distribution of the electromagnetic radiation prior to display of the radiation to a user of the system; and a spatial filter, located downstream of the angular intensity distribution element, and arranged to receive the electromagnetic radiation and to at least partially correct for the undesirable feature (e.g. at least partially reduce and/or eliminate the feature, or an effect related to that feature).

The angular intensity distribution element may be arranged to increase a numerical aperture of the angular intensity distribution of the received electromagnetic radiation.

The angular intensity distribution element may be arranged to at least partially diffract received electromagnetic radiation.

The undesirable feature may be electromagnetic radiation constituting a zero diffraction order. This might alternatively or additionally be described as radiation that is not diffracted, or does not have its propagation path deviated by the angular intensity distribution element.

The spatial filter may be configured to reduce a transmission of electromagnetic radiation constituting a zero diffraction order.

The spatial filter may be located in a path of electromagnetic radiation constituting the zero diffraction order.

The spatial filter may be located at, or proximate to, a focal region of radiation constituting one or more zero diffraction orders.

The spatial filter may be located on, or form a part of, one of the optical elements.

The spatial filter may comprise two regions: a first region that allows substantially unimpeded transmission of electromagnetic radiation; and a second region configured to correct for the undesirable feature.

The second region may have a lower transmittance with respect to the electromagnetic radiation than the first region.

The angular intensity distribution element may be arranged to affect an angular intensity distribution of electromagnetic radiation of a first wavelength, and to substantially transmit electromagnetic radiation of a second, the different wavelength.

The undesirable feature may be the substantial transmission of electromagnetic radiation of the/a second, different wavelength.

The spatial filter may be configured to reduce a transmission of electromagnetic radiation having the/a second, different wavelength.

One or more optical elements may constitute at least a part of an optical combiner for a head-up display.

One or more optical elements may constitute at least a part of a visor, e.g. a visor of or for a helmet.

According to a second aspect of the invention, there is provided a head-up display system, helmet or head mounted display system comprising the display system according to the first aspect.

According to a third aspect of the invention, there is provided a head-up display system, comprising: an angular intensity distribution element, arranged to receive electromagnetic radiation from one or more sources of electromagnetic radiation and to affect an angular intensity distribution of the electromagnetic radiation, the angular intensity distribution element introducing an undesirable feature into a distribution of the electromagnetic radiation; one or more optical elements located downstream of the angular intensity distribution element, and arranged to affect an angular and/or spatial intensity distribution of the electromagnetic radiation prior to display of the radiation to a user of the system; and a spatial filter, located downstream of the angular intensity distribution element, and arranged to receive the electromagnetic radiation and to at least partially correct for the undesirable feature.

According to a fourth aspect of the invention, there is provided a display method comprising: affecting an angular intensity distribution of electromagnetic radiation, the affecting being such that an undesirable feature is introduced into a distribution of the electromagnetic radiation; downstream of the location where the affecting of the angular intensity distribution of electromagnetic radiation takes place, further affecting an angular and/or spatial intensity distribution of the electromagnetic radiation prior to displaying the radiation to a user; and downstream of the location where the affecting of the angular intensity distribution of electromagnetic radiation takes place, spatially filtering the electromagnetic radiation to at least partially correct for the undesirable feature.

One or more features of any aspect of the invention may, where apparent to the skilled person from a reading of this disclosure, be combined with and/or replace one or more features of another aspect of the invention.

For a better understanding of the invention, and to show how embodiments of the same may be carried into effect, reference will now be made, by way of example, to the accompanying diagrammatic Figures in which:
Figure 1 schematically depicts a display system in which an angular intensity distribution element introduces an undesirable feature into a distribution of electromagnetic radiation;
Figure 2 schematically depicts an output intensity distribution as viewed by a user of the display system of Figure 1;
Figure 3 schematically depicts a display system according to an example embodiment of the present invention; and
Figure 4 schematically depicts an output intensity distribution as viewed by a user of the display system of Figure 3.

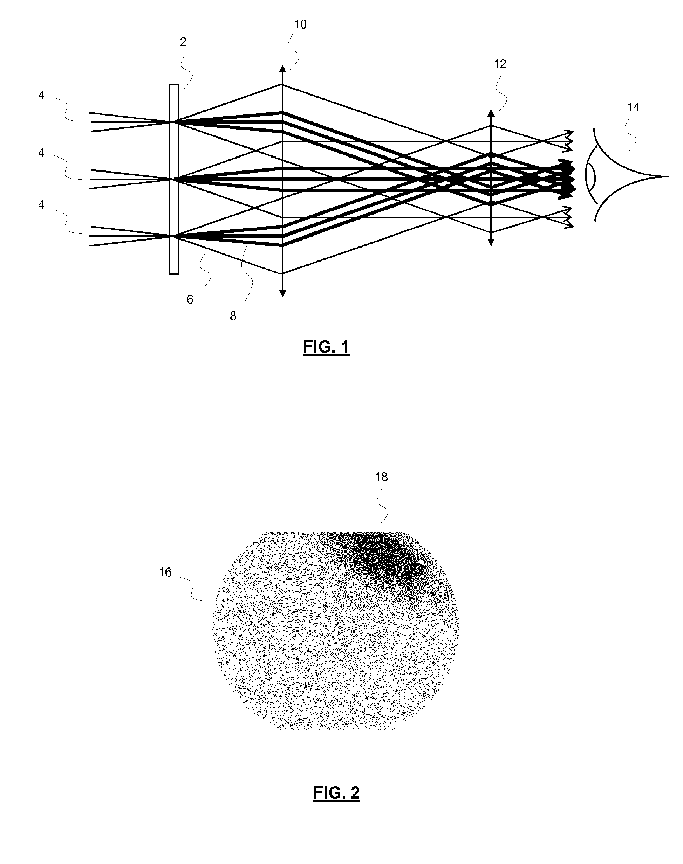

Figure 1 schematically depicts a display system. The display system comprises an angular intensity distribution element 2. The angular intensity distribution element 2 is arranged to receive electromagnetic radiation from one or more sources of electromagnetic radiation 4. The electromagnetic radiation 4 may, for example, constitute an image to be displayed to a user. The angular intensity distribution element 2 is arranged to affect an angular intensity distribution of the electromagnetic radiation 4 that is received by the elements 2. In this particular example, the angular intensity distribution element is arranged to increase the numerical aperture of the radiation 4 that is received by the element 2 and projected therefrom. Such an increase in the numerical aperture may be advantageous, for example making it easier for a user to view an image ultimately formed at the eye of the user by the radiation 4, or allows that image to be viewed over a greater viewing angle.

The angular intensity distribution element 2 may affect the angular intensity distribution of the received electromagnetic radiation 4 in any one of a number of ways. For instance, the angular intensity distribution may be affected by transmission or reflection, and more particularly by refraction, scattering, diffusion, and so on. However, a controlled way of achieving a controlled increase in the numerical aperture, or a controlled (general) change in the angular intensity distribution, is to employ diffraction. For example, diffraction might result in a more uniform image being visible to a user, in comparison with diffusion through a thin sheet of paper or similar. If diffraction is used, the angular intensity distribution element may be referred to, alternatively and/or additionally, as a diffractive optical element. In the example shown in Figure 1, diffraction is used to increase the numerical aperture of the radiation 4 that is received by the angular intensity distribution element 2. The angular intensity distribution element 2 is a diffraction grating that, in this example, operates in transmission.

Figure 1 shows that the angular intensity distribution of radiation leaving the angular intensity distribution element 2 comprises radiation diffracted into first and higher orders 6. However, an amount of radiation will be present in the zero diffraction order 8. Radiation in the zero order 8 will propagate onto and through the remainder of the display system as if no diffraction had taken place.

The diffracted electromagnetic radiation 6 and the zero diffraction order radiation 8 propagate onto and through a first optical element 10 and then onto and through a second optical element 12, before propagating toward a viewing position of a user 14. The optical elements 10, 12 may be, for instance, any suitable optical element that may be used to (further) affect an angular and/or a spatial intensity distribution of the electromagnetic radiation 6, 8. For instance, the elements 10, 12 may comprise one or more mirrors, lenses, or the like, used in some way to condition or shape the radiation. In other embodiments, there may be greater or fewer optical elements than shown in the Figure.

If the intensity of the zero diffraction order radiation 8 is significant, and for example above a general intensity level of the other diffraction orders, then the zero-diffraction order radiation 8 may constitute what might be referred to as a "hot-spot" in an image visible to the user 14. It is desirable for the image presented to the user to comprise an intensity distribution that is as uniform as possible and as intended, and so an unintended hot-spot is not helpful in this regard. It is therefore desirable to remove this "hot-spot" from the image viewed by the user 14.

Figure 2 shows a typical intensity distribution 16 as viewed by the user of the display system of Figure 1. Although the distribution is, in general, quite uniform, a hot-spot 18 is clearly visible. Such a hot-spot that should ideally be removed, or at least reduced in intensity (i.e. corrected for).

Figures 1 and 2 have shown an undesirable feature being the presence and propagation of zero diffraction order radiation. However, problems of the prior art are not limited to such an example. For instance, in another example, it may well be that zero diffraction order radiation is in fact desired, and higher diffraction order radiation is less desired. In another example, the increase in the numerical aperture may be such that the diffraction orders are separated to an extent that reduces image quality, and this needs to be corrected. In another example, the affecting of the angular intensity distribution may introduce a pattern on or within the image that decreases an image quality, and needs to be corrected in some way. In other words, one or more of a large number of undesired features may be introduced into an intensity distribution of radiation that is affected (i.e. in some way controlled or influenced by) an angular intensity distribution element.

According to an example embodiment of the present invention, the above mentioned problems may be at least partially obviated or mitigated. According to an example embodiment of the present invention, a spatial filter is located downstream of the angular intensity distribution element. The spatial filter is arranged to receive the electromagnetic radiation and to at least partially correct for the undesirable feature in the distribution of the radiation (e.g. at least partially reduce and/or eliminate the feature, or an effect related to that feature).

As discussed above, whether a feature is desired or undesired may depend on the application in question. Example embodiments of the invention lie in an undesirable feature being at least partially correctable downstream of the angular intensity distribution element. This might mean that the angular intensity distribution element does not need to be constructed to strict tolerances or the like, because optical problems or artefacts can be solved downstream, perhaps in a simpler way, or in a more optically or cost effective way.

At least in theory, an attempt could be made to correct for undesirable features downstream of the angular intensity distribution element in angular space. However, this is not always practical or even possible. For instance, dealing with problems in angular space might require multiple correcting elements at multiple locations. There may not be sufficient space or financial budget for such multiple elements. Alternatively and/or additionally, the resolution required in angular space to, for instance, reduce or eliminate zero-diffraction order radiation (or similar) without affecting first and higher diffraction orders may be difficult or impossible. Thus, spatial correction may at least partially obviate or mitigate problems associated with attempting to correct the distribution in angular space, or at least provides a viable alternative to correction in angular space.

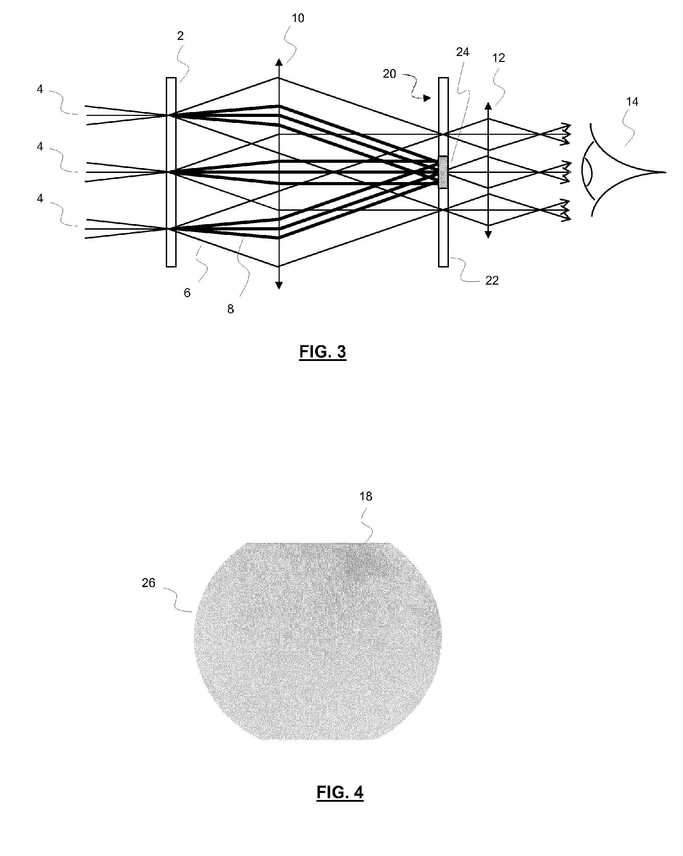

Figure 3 schematically depicts a display system in accordance with an example embodiment of the present invention. The system is substantially as shown in and described with reference to Figure 1. However, and in contrast with the system shown in Figure 1, the system of Figure 3 comprises a spatial filter 20. Generally speaking, and in this example embodiment, the spatial filter 20 is configured to reduce a transmission of electromagnetic radiation constituting the zero diffraction order 8. This may be most conveniently achieved by locating the spatial filter 20 in the path of the electromagnetic radiation that constitutes the zero-diffraction order 8.

In order to most efficiently and effectively reduce the transmission of the radiation constituting the zero diffraction order 8, the spatial filter 20 is located at, or at least proximate to, a focal point of radiation constituting the zero-diffraction orders 8. For instance, this might be where one or more chief or principal rays cross an optical axis of the system. This might be the most effective location for conveniently affecting, in some way, the radiation constituting the more zero diffraction orders 8. In some examples, such as that shown in the Figure 3, there may not be a true single focal point, but more of a blurred focal region. The filter may be conveniently located within or proximate to (e.g. just upstream or downstream of) the region.

In Figure 3, the spatial filter 20 is shown as being located between the first optical element 10 and the second optical element 12. The spatial filter 20 might therefore be described as being independent in form relative to the first and second optical elements 10, 12. In such an embodiment, the spatial filter 20 might comprise two regions. A first region 22 is provided that allows substantially unimpeded transmission of electromagnetic radiation. This ensures that this region 22 of the filter 20 does not substantially affect the image presented to the user 14. The filter 20 is provided with a second region 24, which is configured to correct for the undesirable feature. When correcting for zero diffraction order radiation, it is likely that the second region 24 will have a lower transmittance with respect to the electromagnetic radiation constituting the zero order than the first region 22.

In one example, the first region 22 might completely surround the second region 24. For instance, the second region 24 might be formed in or on a sheet, such that the first region 22 forms part of the sheet that surrounds the second region 24. In another example, the first region might not be sheet-like, but could be a wire, arm or other support that is used to hold the second region in position.

The second region (or, more generally, the functional part of any spatial filter), might not function based simply or solely on reduced transmission. For instance, the spatial filter may be arranged to at least partially correct for the undesirable feature by being configured to undertake one or more of: reduce the transmission of radiation; absorb radiation; reflect radiation; scatter radiation; diffract radiation; diffuse radiation; refract radiation. The filter will in some way have a controlled or controllable affect on the radiation to reduce or remove the undesirable feature in the intensity distribution of the radiation. For instance, the affect might be to reduce the amount or intensity of radiation that would otherwise have propagated along a particular path.

Figure 4 shows the intensity distribution 26 viewable to the user of the system of Figure 3. It can be seen that the spatial filter of Figure 3 has significantly reduced the presence of the hotspot 18. This is apparent by comparing the intensity distribution of Figure 4 with that already shown in and described with reference to Figure 2.

In Figure 3, the spatial filter is shown as being an element that is spatially separated from (other) optical elements of the display system. However, in other embodiments, the spatial filter may be located on, and/or form a part of, one of the (other) optical elements of the system. For instance, the filter may comprise a coating on an optical element, or a section of the optical element provided specifically for the filtering functionality.

In some embodiments, providing a filter on or as part of an optical element may be preferable, since fewer independent components may be required in the system. This might result in a simpler and more cost effective display system, and/or might simply reduce the number of element through which radiation has to pass, which might improve transmission efficiency. However, locating the filter on or as part of an optical element might only be possible if the angular intensity distribution of radiation at that point in the display system is suitable for (or best suited for) spatial filtering for removing or reducing the undesirable feature from that distribution. For instance, this might only be practical or possible when the optical element is located at or proximate to a focal point or region of the system or similar. In situations where this is not possible or practical, then the independent spatial filter as already described above (or similar) might be preferable.

As discussed previously and briefly, the spatial filter may have any suitable configuration that allows it to perform the required functionality. The filter might be metallic in nature, dielectric in nature, patterned in nature, and so on. However, care should be taken when configuring or otherwise providing the spatial filter to avoid problems that might otherwise arise. For instance, if the filter is at least partially reflective, care should be taken to ensure that reflected radiation does not cause secondary image issues. If the coating is at least partially absorptive, the coating should be thin enough not to distort the waveform of the radiation that will constitute the image to be presented to the user. If metallic, deposition of a filtering layer must be undertaken accurately, to ensure that the correct amount of radiation is, for example, absorbed. For instance, and in general, a typical required transmission of the radiation in the region of the filter might be 75%-80%. It is likely that some form of anti-reflective coating on one or more surfaces of the system will be required to reduce reflections within the system which could otherwise cause problems to the user, for example image artefacts, or secondary images, or the like. If the spatial filter is provided in or on an optical element of the system, then it might be easier to provide the anti-reflective coating over and/or under the spatial filter. For instance, this might be easier than attempting to accurately apply a coating around or about the filter.

In the above embodiments, no reference has been made to the wavelength or wavelengths of radiation constituting the electromagnetic radiation. In one example, where diffraction is used to affect the angular intensity distribution, the angular intensity distribution element is likely to be configured to diffract radiation of a single wavelength, or a narrow range of wavelengths. If radiation falls outside of that wavelength or range of wavelengths, then the angular intensity distribution profile of that radiation will be largely unaffected by the element. For instance, such radiation might not be diffracted by a diffractive angular intensity distribution element. In such a case, one undesirable characteristic introduced into the radiation that leaves the angular intensity distribution element might be a higher than desirable intensity of radiation having wavelengths unaffected, or more generally unaffected, by the angular intensity distribution element.

The zero-diffraction order problem described above might thus be added to by radiation of a second, different wavelength that is not diffracted by the angular intensity distribution element. Alternatively, the propagation of the radiation of a second, different wavelength second might be the sole or main undesirable feature. In effect, such radiation might be described, alternatively or additionally, as zero diffraction order, since it is not diffracted.

Radiation of the second, different, wavelength (i.e. not diffracted radiation) will propagate through the system, and could serve as a hot-spot for radiation of this wavelength. To correct for this, the spatial filter described above may be particularly configured to, alternatively and/or additionally, reduce the transmission of the electromagnetic radiation having the second wavelength. That is, the spatial filter can be configured to be wavelength specific in its functionality. In one example, the angular intensity distribution element might be optimised to affect the distribution of radiation of a first wavelength (e.g. substantially diffract that radiation), and the filter might be optimised to in some way filter radiation of a second wavelength (e.g. to reduce propagation of that radiation).

In the above examples, a relatively simple layout of a display system has been shown and described. In practice, a display system may be more complex, with a more complex arrangement of optical elements and/or radiation paths. In such more complex examples, it may not be as straightforward to identify, for instance, a point at which a spatial filter could or should be located, for example a point at which zero-order radiation is focussed. Instead, the focal point may in fact be more of a focal region, in the locality of which region filtering may take place. The spatial filter may work best when at an exact determined location, but may still have a degree of usable functionality when located just upstream or downstream of such a location. In any system, a good location for the filter may be determined via routine modelling of the system, for example using ray-tracing techniques or similar, as would been known to someone skilled in the art.

In the described embodiments, a single spatial filter has been shown and described. In a different embodiment, more than one filter may be used. A first filter may be used to correct for a first undesired feature, or a first property thereof. A second filter may be used to correct for a second undesired feature, or a property thereof, or a second property of the first feature. The different features and/or properties may include angular extents of radiation distributions in different directions, different wavelengths, and the like.

The above invention has been described in relation to display systems. Indeed, the invention is applicable to such display systems in general, such as projection systems. However, the invention might be even more applicable to head-up display systems, such as head-mounted display systems, helmet mounted display systems, and so on. This is because head-up display systems often make use of an optical combiner, which is usually at least partially transparent. This means that a user can look through the combiner to see, for instance, an outside world view. At the same time, a display system (or other parts of the system) may be used to display on that combiner an image to be viewed by the user, and for instance overlaid on top of that real world view. In such a head-up display system, the avoidance of hot spots might be even more critical to avoid distraction to the user and/or an uncomfortable or unpleasant viewing experience. This might be particularly true when the image is projected onto, and/or the combiner is or comprises, a visor used or usable by a user. For instance, the visor may be a visor of a helmet worn by a user, for example a helmet of a pilot of an aircraft. The presence of hot-spots or the like in such close proximity to the user might cause more problems in such a scenario, and it would therefore be desirable to avoid hot spots whenever and wherever possible.

In the above embodiments, a display system has been described. In another embodiment, the invention might relate to a display method. The method might comprise affecting an angular intensity distribution of electromagnetic radiation. An angular intensity distribution might be used to achieve this. The affecting might introduce an undesirable feature into a distribution of the electromagnetic radiation. Downstream of the location where the distribution is affected, further affecting of the angular and/or spatial intensity distribution may take place, prior to the display of the radiation to a user. Such further affecting might be implemented using one or more optical elements. Downstream of the affecting of the angular intensity distribution of the radiation, spatial filtering may take place to at least partially correct for the undesirable feature in the distribution of the radiation. A spatial filter might be used to perform such filtering.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display system, comprising:
an angular intensity distribution element, arranged to receive electromagnetic radiation from one or more sources of electromagnetic radiation and to affect an angular intensity distribution of the electromagnetic radiation, the angular intensity distribution element introducing an undesirable feature into a distribution of the electromagnetic radiation;
one or more optical elements located downstream of the angular intensity distribution element, and arranged to affect an angular and/or spatial intensity distribution of the electromagnetic radiation prior to display of the radiation to a user of the system;
and
a spatial filter, located downstream of the angular intensity distribution element, and arranged to receive the electromagnetic radiation and to at least partially correct for the undesirable feature.

2. The displays system of claim 1, wherein the angular intensity distribution element is arranged to increase a numerical aperture of the angular intensity distribution of the received electromagnetic radiation.

3. The display system of claim 1 or claim 2, wherein the angular intensity distribution element is arranged to at least partially diffract received electromagnetic radiation.

4. The display system of claim 3, wherein the undesirable feature is electromagnetic radiation constituting a zero diffraction order.

5. The display system of claim 4, wherein the spatial filter is configured to reduce a transmission of electromagnetic radiation constituting a zero diffraction order.

6. The display system of claim 4 or claim 5, wherein the spatial filter is located in a path of electromagnetic radiation constituting the zero diffraction order.

7. The display system of any of claims 4 to 6, wherein the spatial filter is located at, or proximate to, a focal region of radiation constituting one or more zero diffraction orders.

8. The display system of any preceding claim, wherein the spatial filter is located on, or forms part of, one of the optical elements.

9. The display system of any preceding claim, wherein the spatial filter comprises two regions:
a first region that allows substantially unimpeded transmission of electromagnetic radiation; and
a second region configured to correct for the undesirable feature.

10. The display system of claim 9, wherein the second region has a lower transmittance with respect to the electromagnetic radiation than the first region.

11. The display system of any preceding claim, wherein the angular intensity distribution element is arranged to affect an angular intensity distribution of electromagnetic radiation of a first wavelength, and to substantially transmit electromagnetic radiation of a second, the different wavelength, the undesirable feature being the substantial transmission of the electromagnetic radiation of the second, different wavelength.

12. The display system of claim 11, wherein the spatial filter is configured to reduce a transmission of electromagnetic radiation having the second wavelength.

13. The display system of any preceding claim, wherein one or more optical elements constitute at least a part of an optical combiner for a head-up display.

14. The display system of any preceding claim, wherein one or more optical elements constitute at least a part of a visor.

15. A head-up display, helmet or head mounted display system comprising the display system of any preceding claim.
